**Europäisches Patentamt**

**European Patent Office**

**Office européen des brevets**

(19)

(11) Numéro de publication: **0 041 431**
**B1**

(12) **FASCICULE DE BREVET EUROPEEN**

(45) Date de publication du fascicule du brevet:
**30.11.83**

(21) Numéro de dépôt: **81400800.9**

(22) Date de dépôt: **21.05.81**

(51) Int. Cl.³: **B 65 D  81/12,** B 29 C  1/02,
B 29 D  27/00

(54) Particule de remplissage en mousse de matière thermoplastique, procédé et dispositif pour sa fabrication.

(30) Priorité: **23.05.80  FR 8011497**

(43) Date de publication de la demande:
**09.12.81 Bulletin 81/49**

(45) Mention de la délivrance du brevet:
**30.11.83 Bulletin 83/48**

(84) Etats contractants désignés:
**BE CH DE GB IT LI LU NL**

(56) Documents cités:
**FR - A - 2 019 870**
**FR - A - 2 020 273**
**FR - A - 2 158 334**
**FR - A - 2 207 796**
**US - A - 3 066 382**
**US - A - 3 188 264**
**US - A - 3 400 037**
**US - E - 27 243**

(73) Titulaire: **Deledalle, Maurice, F-52110 Nully (FR)**
Titulaire: **Deledalle, Jacques, F-52110 Nully (FR)**

(72) Inventeur: **Deledalle, Maurice, F-52110 Nully (FR)**
Inventeur: **Deledalle, Jacques, F-52110 Nully (FR)**

(74) Mandataire: **Blétry, Robert et al, OFFICE
BLETRY 2, Boulevard de Strasbourg, F-75010 Paris (FR)**

BUNDESDRUCKEREI BERLIN

Pasticule de cemplissage en mousse de matière thermoplastique, procédé et
dispositif pour sa fabrication

La présente invention concerne une particule de remplissage en mousse de matière thermoplastique du type comprenant une face concave et une face convexe qui se raccordent suivant une ligne fermée et qui ont une peau comportant des cellules fermées.

Dans le domaine de l'emballage, il est connu d'utiliser divers matériaux de calage pour combler les vides laissés entre les objets à emballer et le carton ou autre récipient d'emballage, lorsque les objets ont des formes ou sont en quantités qui ne permettent pas ou qui ne sont pas suffisamment importantes pour leur adapter un emballage spécifique moulé. Les matériaux utilisés habituellement à cet effet sont la fibre de bois ou les frisures de papier qui ont l'inconvénient d'entraîner des coûts de main d'oeuvre élevés et d'occasionner des poussières ou moisissures. Il est aussi connu d'utiliser à titre de matériau de remplissage et de calage des particules de formes variées en matière plastique, en particulier en matière thermoplastique expansée. La présente invention concerne plus particulièrement ce dernier type de particules.

Les principales qualités exigées des particules de remplissage sont les suivantes:

a) elles doivent permettre un écoulement libre, c'est-à-dire qu'elles doivent être capables de s'écouler par gravité, sans action mécanique, lorsqu'on les déverse dans un carton d'emballage ou autre récipient pour combler les vides laissés entre les objets à emballer et ledit carton d'emballage.

b) Elles doivent avoir une faible épaisseur pour pouvoir se glisser dans les petits intervalles.

c) Elles doivent être capables de résister aux contraintes statiques des objets relativement lourds emballés.

d) Elles doivent avoir ce que l'on appelle une »mémoire élastique«, c'est-à-dire qu'elles doivent être capables de se déformer élastiquement sans se rompre et de reprendre ensuite leur forme initiale après des chocs ou des contraintes dynamiques répétées.

e) Elles doivent être capables de s'autoverrouiller, c'est-à-dire qu'elles doivent être capables de s'accrocher les unes aux autres empêcher une migration des particules et de l'objet dans le carton d'emballage ou autre récipient.

f) Elles ne doivent pas produire de la poussière de matière plastique par érosion due au frottement des particules entre elles ou contre des paroi lors de leur manutention.

g) Elles doivent avoir une faible densité apparente pour une raison d'économie de matière.

h) Leur fabrication doit être économique du point de vue énergie consommée.

Les procédés connus de fabrication des particules de remplissage en matière thermoplastique expansée peuvent être classés en trois catégories. Les procédés de la première catégorie consistent à extruder une matière thermoplastique expansible, par exemple un polymérisat de styrène, à l'aide d'une extrudeuse ou boudineuse à vis sans fin. L'extrudeuse est chauffée à une température prédéterminée de façon à mettre en fusion la matière thermoplastique. Celle-ci contient un gaz qui a été incorporé au préalable à la matière thermoplastique introduite dans l'extrudeuse ou qui est introduit et mélangé à la matière thermoplastique dans l'extrudeuse. La matière thermoplastique expensible en fusion est éjectée par la vis sans fin à l'extérieur de l'extrudeuse au travers d'une filière dont le ou les orifices peuvent avoir différents profils, de manière à former un ou des rubans ou boudins ayant une section transversale correspondant au profil du ou des orifices de la filière. Ensuite, immédiatement après la sortie de la filière, on fait passer le ou les rubans ou boudins dans de l'eau froide (environ 20°C) afin de solidifier leur surface extérieure et d'empêcher ainsi qu'ils ne s'expansent. Les rubans ou boudins ainsi refroidis sont introduits dans des appareils leur donnant une forme désirée par contrainte mécanique, puis ils sont tronçonnés perpendiculairement au sens d'avance du ou des boudins afin former des granulés. Ces granulés, constitués de matière thermoplastique solidifiée et non encore expansée, sont ensuite expansés par passage dans un appareil où ils sont mis en présence d'une atmosphère de vapeur d'eau relativement chaude. L'opération d'expansion est réalisée en plusieurs étapes entrecoupées de périodes de repos de plusieurs heures pendant lesquelles les particules partiellement expansées sont stockées dans des silos de séchage et de stabilisation. Les passages dans l'atmosphère de vapeur d'eau sont répétés jusqu'à trois fois pour obtenir les particules définitives.

Des procédés de cette première catégorie sont par exemple décrits dans le brevet français n° 2 158 334 et dans le brevet américain n° 3 066 382. Outre la nécessité d'utiliser des dispositifs de mise en forme, par exemple par laminage, en aval de l'extrudeuse, et/ou la nécessité d'utiliser des filières ayant des orifices de forme compliquée, les procédés de la première catégorie ont l'inconvénient d'entraîner une consommation d'énergie importante. En effet, la matière thermoplastique expansible qui sort de la filière de l'extrudeuse à haute température est refroidie à sa sortie de la filière pour éviter une expansion qui contrarierait sa mise en forme, et, après avoir été mise en forme et découpée en granulés, elle est réchauffée à nouveau plusieurs fois pour l'expanser. Comme les granulés non expansés ont des dimensions relativement faibles, il faut les expanser de 7 à 10 fois leur volume initial, d'où une consommation importante d'énergie et des manipulation répétées. En outre, les particules de remplissage obtenues par les procédés de la première catégorie ont une aptitude à l'autoverrouillage relativement médiocre et une densité apparente qui descend rarement au-dessous de 8 kg/m³.

Dans les procédés de la deuxième catégorie, la matière thermoplastique expansible est extrudée comme dans les procédés de la première catégorie. Toutefois, dans ce cas, le ruban ou boudin extrudé, qui peut avoir différentes formes selon le profil du ou des orifices de la filière utilisée, n'est pas brutalement refroidi à l'eau, mais on le laisse s'expanser sous l'action de sa propre chaleur interne et se refroidir progressivement à l'air. Le ruban ou boudin partiellement expansé est ensuite tiré et conduit à travers des appareils compliqués de mise en forme, puis il est tronçonné en particules perpendiculairement ou obliquement au sens de son mouvement d'avance.

Des procédés de la deuxième catégorie sont par exemple décrits dans les brevets français n° 2 019 870 et 2 020 273 et dans les brevets américains n° 3 188 264 et 3 400 037, ce dernier ayant été redélivré sous le numéro 27 243. Les procédés de la deuxième catégorie ont l'avantage de consommer moins d'énergie que les procédé de la première catégorie pour l'expansion des particules, étant donné que le ruban ou boudin de matière thermoplastique extrudée est déjà partiellement expansé sous l'action de sa propre chaleur résiduelle interne avant d'être découpé et que, par suite, une quantité de chaleur moins importante peut être fournie aux particules découpées pour les expanser au volume désiré.

Toutefois, dans les procédés de la deuxième catégorie, en refroidissant progressivement le ruban ou boudin qui s'expanse en sortant de la filière, on constate dans la pratique que le gaz inclu dans la matière thermoplastique a une vitesse d'éjection plus importante que la vitesse de sortie de la matière elle-même. De ce fait et du fait que le ruban ou boudin est soumis à une traction, il se crée dans la matière des cellules filiformes qui, au moment du tronçonnage du ruban ou boudin, constituent un réseau de minuscules tubes ouverts des deux côtés. Lorsque les particules sont ensuite expansées à la vapeur d'eau, elles augmentent de volume sans pour autant que les extrémités des cellules filiformes soient obturées. Les particules de remplissage ayant une telle structure interne résistent mal à une pression quelconque exercée sur elle, car en s'écrasant elles éjectent vers l'extérieur l'air ou le gaz qu'elles contiennent, ce qui les empêche de reprendre totalement leur forme initiale. En outre, les particules obtenues par les procédés de la deuxième catégorie ont une aptitude à l'autoverrouillage relativement médiocre, à moins de leur donner des formes relativement complexes, comme par exemple celles décrites dans les brevets français n° 2 019 870 ou 2 020 273 ou dans le brevet américain n° 3 188 264. Ces formes complexes nécessitent l'utilisation de filières coûteuses et/ou d'appareils compliqués de mise en forme. En outre les particules décrites dans ces documents antérieurs ont une épaisseur relativement importante, qui ne leur permet pas de se glisser dans des intervalles de fiable épaisseur. Les particules décrites dans le brevet américain 3 400 037 ne nécessitent pas, our leur fabrication, de filières coûteuse et/ou d'appareil compliqués de mise en forme, mais leur aptitude à l'autoverrouillage est d'autant meilleure et leur densité apparente est d'autant plus faible que leur courbure est grande. Toutefois, l'augmentation de la courbure des particules entraîne corrélativement une augmentation de leur épaisseur totale ce qui est contraire à l'un des buts recherchés. En outre, les particules concavo-convexes en forme de calotte sphérique ont tendance, en service, à former des piles qui augmentent leur densité apparente et, lorsque leur face convexe est soumise à des contraintes dirigées suivant leur axe de symétrie ou sensiblement suivant cet axe, leur bord circulaire a tendance à se rompre.

Dans les procédés de la troisième catégorie, décrits par exemple dans le certificat d'utilité français n° 2 207 796, la matière thermoplastique est découpée immédiatement à sa sortie de la filière de l'extrudeuse pendant qu'elle est encore en fusion et avant qu'une expansion appréciable se soit produite. En outre la matière thermoplastique expansible est agitée à l'intérieur de l'extrudeuse jusqu'à son point de moussage de manière à rompre les cellules. Les particules obtenues par ce procédé ont une structure interne formée de cellules ouvertes et une peau superficielle lisse formée de cellules formées. Du fait de leur structure interne à cellules ouvertes, ces particules reprennent difficilement leur forme initiale lorsque, en service, elles sont soumises à une contrainte d'écrasement. En outre, comme les particules concavo-convexes en forme de calotte sphérique décrite dans le brevet américain 3 400 037, elles ont une épaisseur totale relativement importante, elles ont tendance à former des piles qui, en service, augment leur densité apparente, et leur bord circulaire a tendance à se rompre lorsque, en service, leur face convexe est soumise à une contrainte dirigée suivant leur axe de symétrie. Enfin, du fait que leur bord circulaire est très mince, une quantité importante de poussières de matière thermoplastique est produite par érosion par frottement des particules entre elles ou contre des parois en service et pendant les manutentions des particules.

D'après ce qui précède, on notera qu'aucune des particules antérieurement connues ne présentent toutes les qualités énoncées plus haut aux points a) à h).

La présente invention a pour but de fournir une particule de remplissage en mousse de matière thermoplastique, du type comprenant une face concave et une face convexe, et qui présente toutes les qualités énoncées plus haut aux points a) à h).

L'invention a également pour but de fournir un procédé et un dispositif pour la fabrication d'une telle particule.

La particule selon la présente invention est caractérisée en ce qu'elle présente la forme d'une soucoupe sensiblement ovale dont un seul côté correspondant à la plus grande dimension est recourbé vers le centre de la surface concave. De préférence, elle a une structure interne formée de cellules fermées.

La forme de la particule selon l'invention ressemble fortement à celle de la partie supérieure du pavillon de l'oreille humaine, dont le nom scientifique est helix.

Les particules selon l'invention peuvent avoir une longueur comprise entre 30 et 40 mm, une largeur comprise entre 20 et 30 mm et une épaisseur, y compris le côté recourbé, comprise entre 7 et 12 mm. Les particules permettent un écoulement libre et leur faible épaisseur leur permet de se glisser facilement dans des intervalles minces entre deux objets à emballer ou entre un objet et le carton d'emballage. En outre, leur faible épaisseur contribue à l'obtention d'un effet de mémoire élastique. Du fait que la structure interne des cellules est formée d'une multitude de petites cellules fermées remplies d'air ou de gaz et que la peau de surface des particules est constituée par des cellules fermées en grand nombre, l'air ou le gaz emprisonné ne peut pas s'échapper vers l'extérieur. En conséquence, les particules agissent comme des ballons gonflés, ce qui leur permet de bien résister aux contraintes de pression statiques ou dynamiques. De plus, cette résistance est augmentée par la présence du côté recourbé qui agit à la fois comme un renfort et comme une lame de ressort. En outre, grâce au fait que aussi bien leur peau de surface que leur structure interne est formée de cellules fermées et grâce à la présence du côté recourbé qui agit comme une lame de ressort, les particules selon l'invention reprennent complètement leur forme initiale après avoir été soumises à une contrainte de pression. Il en résulte que les objets emballés resteront bien calés dans leur emballage, même si ce dernier subit des chocs répétés. En outre, la forme particulière des particules selon l'invention, en particulier leur unique côté recourbé permet un autoverrouillage parfait des particules entre elles dans toutes les positions que celles-ci peuvent prendre en tombant par gravité dans un emballage, ce qui permet d'assurer un calage parfait du ou des objets dans leur emballage. En outre, les particules selon l'invention ont un bord arrondi, ce qui empêche la production des nombreuses poussières qui se produisent avec les particules antérieurement connues à bord mince. En outre, grâce à la forme des particules selon l'invention, de nombreux vides sont ménagés entre les particules en service, ce qui diminue leur densité apparente, cette dernière pouvant atteindre des valeurs aussi basses que 4 kg/m$^3$.

Le procédé de fabrication des particules selon l'invention s'apparente au procédé connu de la troisième catégorie qui a été décrit plus haut dans la mesure où, comme dans ce procédé connu, il consiste à faire passer en continu une masse de matière thermoplastique expansible à une température prédéterminée à travers au moins un orifice, et à découper périodiquement la partie en saillie de ladite masse à sa sortie de l'orifice afin de produire plusieurs particules. Toutefois, le procédé selon l'invention est caractérisé en ce qu'il consiste à recourber vers le centre dudit orifice la partie de ladite masse qui se trouve près d'un côté de la périphérie dudit orifice, et à effectuer le découpage de ladite masse du côté opposé de la périphérie dudit orifice. De préférence, on maintient ladite masse à une température comprise entre son point de ramollissement et son point de fusion pendant qu'elle sort dudit orifice.

Le dispositif pour la mise en oeuvre du procédé selon l'invention peut comprendre, de façon connue, des moyens pour faire passer en continu une masse de matière thermoplastique expansible chauffée à travers au moins un orifice, des moyens pour régler la température de ladite masse sortant dudit orifice, et un dispositif de coupe rotatif disposé immédiatement à la sortie dudit orifice et comportant un tambour qui est muni à sa périphérie d'au moins une lame de coupe et dont l'axe de rotation est perpendiculaire à l'axe dudit orifice. Le dispositif selon l'invention est caractérisé en ce que ledit orifice a, de façon connue en soi, une face d'extrémité plane et perpendiculaire à l'axe de l'orifice, et en ce que l'axe de rotation du tambour est décalé par rapport à l'axe de l'orifice dans une direction telle que, dans la zone de sortie de l'orifice, le trajet suivi par le bord tranchant de la lame forme avec la face plane d'extrémité de l'orifice un angle aigu dont le sommet est dirigé dans le sens de rotation du tambour.

L'invention sera maintenant décrite plus en détail en faisant référence aux dessins annexés, sur lesquels:

La figure 1 est une vue en élévation d'une particule selon l'invention.

La figure 2 est une vue en coupe suivant la ligne II-II de la figure 1.

Les figures 3, 4, 5 et 6 montrent quelques configurations parmi les nombreuses configurations susceptibles d'être prises par les particules selon l'invention.

La figure 7 montre schématiquement une installation utilisable pour la production des particules selon l'invention.

La figure 8 montre, à échelle agrandie, le dispositif rotatif de coupe utilisé dans l'installation de la figure 7.

Les figures 9a à 12a et 9b à 13b sont des vues respectivement de face en coupe, à échelle encore agrandie, qui montrent l'action du dispositif rotatif de coupe sur la matière thermoplastique expansible sortant de la filière de l'extrudeuse utilisée dans l'installation de la figure 7.

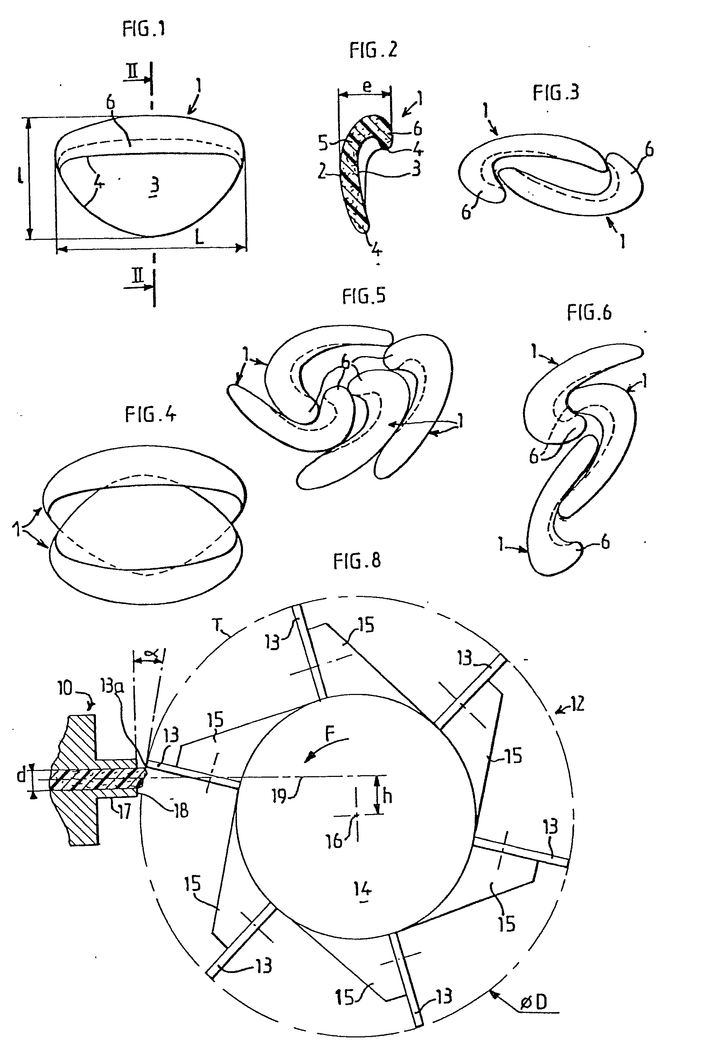

La particule 1 représentée sur les figures 1 et 2 a une face convexe 2 et une face concave 3 qui se raccordent suivant une ligne fermée 4 formant un bord arrondi. Les faces 2 et 3 ont une peau sensiblement lisse qui comporte une multitude de petites cellules fermées. La partie interne 5 de la particule 1 est aussi formée par une multitude de cellules fermées, mais de dimensions plus grandes que celles des cellules de la peau des faces 2 et 3.

La particule 1 a en gros la forme d'une soucoupe ovale dont l'un des deux côtés correspondant à la plus grande dimension est recourbée vers le entre de la surface concave comme cela est indiqué en 6. Ce côté recourbé 6 permet aux particules 1 de s'autoverrouiller les unes par rapport aux autres dans diverses positions comme cela est par exemple illustré dans les figures 3 à 6. En outre, il confère aux particules 1 une grande résistance aux contraintes statiques et dynamiques et une grande élasticité qui contribue, avec la structure interne à cellules fermées, à permettre aux particules 1 de reprendre complètement leur forme initiale après qu'elles ont été soumises, en service, à une déformation ou à une contrainte de pression quelconque tendant à les écraser.

Selon les conditions de fabrication, la particule 1 peut avoir une longueur L comprise entre environ 30 mm et environ 40 mm, une largeur 1 comprise entre environ 20 mm et 30 mm et une épaisseur totale e, y compris le côté recourbé 6, comprise entre environ 7 mm et environ 12 mm, l'épaisseur réelle étant comprise entre environ 4 et 8 mm. De préférence, L est environ égal à 37 mm, 1 est environ égal à 26 mm et e est environ égal à 9 mm, l'épaisseur réelle moyenne étant environ égale à 5 mm.

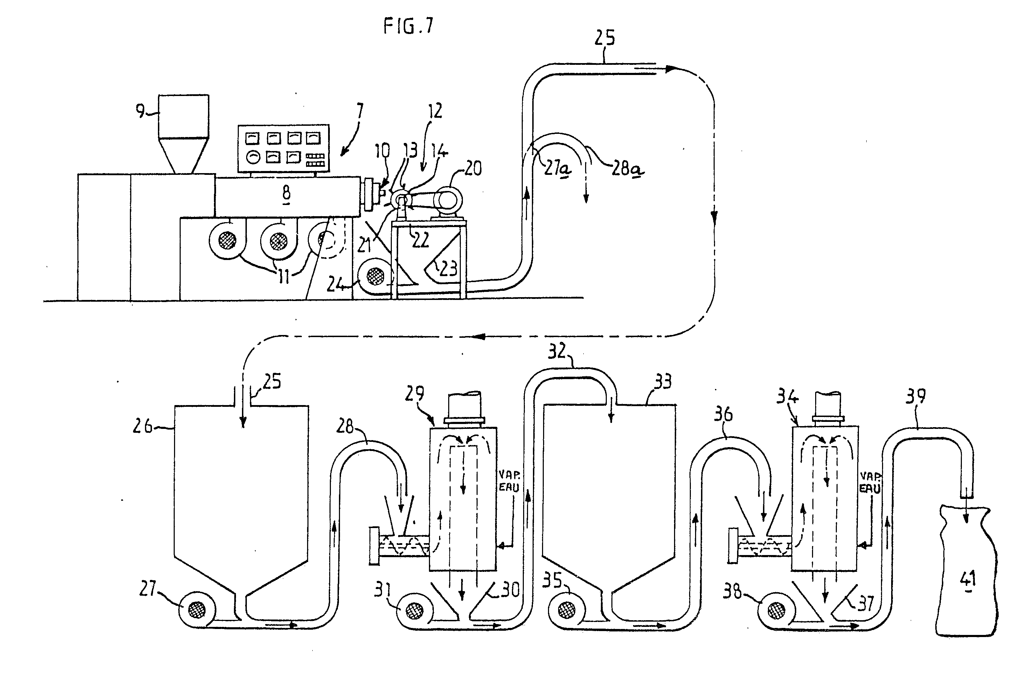

On décrira maintenant une installation au moyen de laquelle les particules 1 peuvent être fabriquées. Comme montré sur la figure 7, l'installation comprend une extrudeuse ou boudineuse conventionelle chauffée 7 à vis sans fin. Les extrudeuses ou boudineuses utilisées pour extruder une matière thermoplastique expansible sont bien connues et il n'est donc pas jugé nécessaire pour la compréhension de l'invention de les décrire en détail.

On notera simplement que l'extrudeuse 7 comporte, de façon connue, un corps 8 dans lequel tourne une vis sans fin (non montrée) qui est entraînée par un moteur électrique à vitesse variable (non montré). Une trémie 9 contenant une réserve de matière thermoplastique est en communication à son extrémité inférieure rétrécie avec l'extrémité d'entrée ou d'alimentation du corps 8 de l'extrudeuse. Au fur et à mesure que la matière thermoplastique s'écoule de la trémie 9 dans le corps 8 de l'extrudeuse, elle est entraînée par la vis sans fin vers l'extrémité opposée du corps 8 à laquelle est fixée une filière 10. Le corps 8 est équipé, de façon connue, de dispositifs électriques de chauffage (non montrés), ainsi que de dispositifs de refroidissement, par exemple des ventilateurs 11 ou des circuits de refroidissement à l'eau, qui, en combinaison avec les dispositifs électriques de chauffage, permettent de régler aux valeurs désirées la température de la matière thermoplastique à l'intérieur du corps 8 de long du trajet suivi par ladite matière de l'extrémité d'entrée adjacente à la trémie 9 jusqu'à la filière 10. Dans le cas présent, la filière 10 peut comporter, de façon connue, un ou plusieurs orifices à section circulaire.

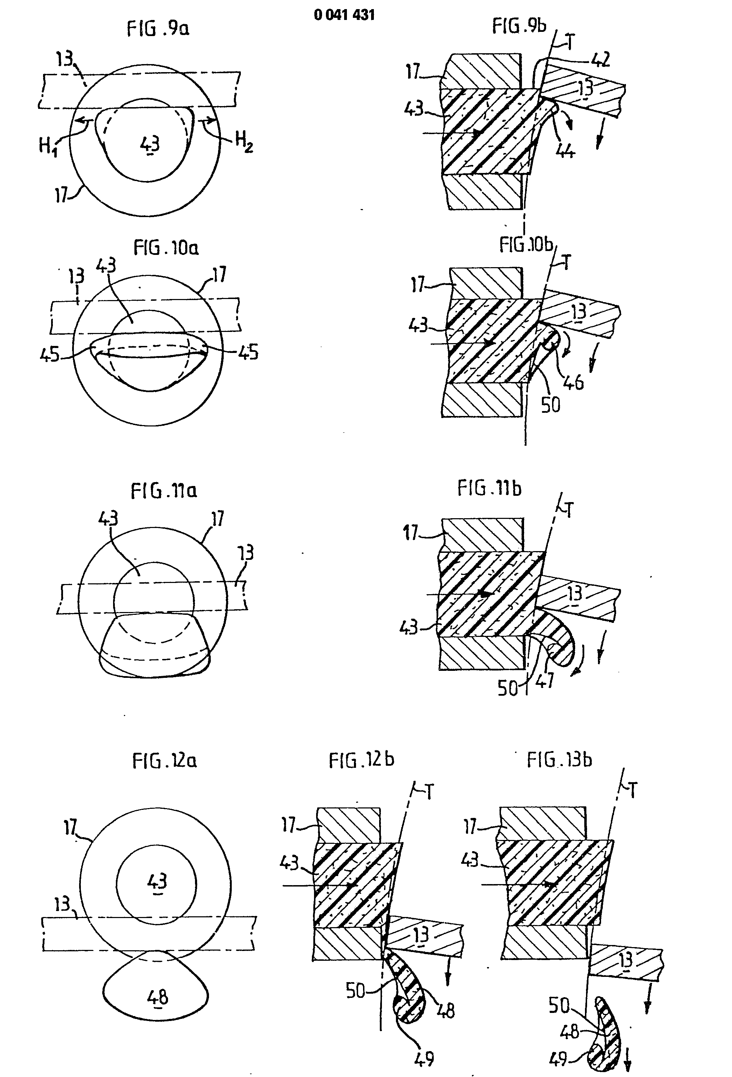

Immédiatement à la soertie de la filière 10 se trouve un dispositif rotatif de coupe 12 comportant au moins une lame de coupe 13. Un dispositif de coupe 12 susceptible d'être utilisé dans la présente invention est représenté à titre d'exemple, à plus grande échelle, dans la figure 8. Le dispositif de coupe 12 représenté sur la figure 8 comporte un cylindre ou tambour tournant 14 d'axe horizontal et muni de six lames 13 régilièrement réparties à sa périphérie. Chaque lame 13 est fixée radialement de façon réglable à un support 15 qui est lui-même fixé au tambour 14 ou qui en fait partie intégrante. Dans le cas où la filière 10 comporte plusieurs orifices de sortie, les axes desdits orifices sont disposés dans un plan horizontal et sont espacés transversalement à l'axe longitudinal du corps 8 de l'extrudeuse. Dans ce cas, chaque lame 13 doit avoir une longueur suffisante dans le sens axial, c'est-à-dire dans une direction parallèle à l'axe 16 du tambour 14, pour pouvoir agir simultanément sur tous les rubans ou boudins de matière thermoplastique sortant des orifices de la filière 10. Chaque orifice de la filière 10 est prolongé par un petit tube cylindrique 17 ayant une face d'extrémité 18 qui est plane et perpendiculaire à l'axe 19 du tube 17.

Le tambour 14 est entraîné en rotation dans le sens de la flèche F au moyen d'un moteur électrique 20 à vitesse variable (montré uniquement dans la figure 7). Le tambour 14 peut être relié cinématiquement au moteur 20 par une transmission appropriée comme montré sur la figure 7 ou il peut être fixé directement sur l'arbre du moteur 20. Comme montré sur la figure 7, le tambour 14 est supporté à ses extrémités par des paliers 21, qui sont eux-mêmes fixés sur une table 22, de telle façon que l'axe 16 du tambour 14 soit perpendiculaire à l'axe longitudinal 19 du ou des tubes 17 de la filière 10 et décalé vers le bas d'une quantité h par rapport à cet axe 19 comme montré sur la figure 8. Dans ces conditions, dans la zone de sortie du ou des tubes 17, le trajet T suivi par le bord tranchant 13a de chaque lame 13 forme avec la face plane d'extrémité 18 du ou de chaque tube 17 un angle aigu $\alpha$ dont le sommet est dirigé dans le sens de rotation du tambour 14. Autrement dit, le bord tranchant 13a de chaque lame passe à une certaine distance du bord supérieur de l'extrémité du tube 17, et il passe avec un très faible jeu près du bord inférieur de l'extrémité du tube 17 de façon à effectuer le découpage de la masse de matière thermoplastique sortant du tube 17 au niveau dudit bord inférieur comme on le verra plus loin. Les particules de matière thermoplastiques découpées par le dispositif rotatif de coupe 12 et partiellement expansées tombent dans une trémie 23 à partir de l'extrémité inférieure de laquelle elles sont acheminées, par exemple par transport pneumatique au moyen d'une soufflante 24 et d'une conduite 25 jusqu'à un réservoir de stockage intermédiaire 26. Une vanne 27a et une conduite 28a branchée en dérivation sur la conduite 25 permettent, si on le désire, de récupérer directement les particules sans les envoyer au réservoir de stockage intermédiaire 26. A partir de l'extrémité inférieure du réservoir 26, les particules sont acheminées, par exemple par transport pneumatique au moyen d'une soufflante 27 et d'une conduite 28 jusqu'à un dispositif de traitement 29 de type connu dans lequel les particules sont soumises à un traitement approprié en vue de provoquer leur expansion. Le dispositif de traitement 20 peut être par exemple un appareil muni d'un agitateur central, dans lequel les particules sont mises en contact avec une atmosphère de vapeur relativement chaude, par exemple de la vapeur d'eau. Bien entendu, le traitement d'expansion pourrait être effectué de toute autre manière connue, par exemple en faisant passer les particules dans de l'eau chaude ou en les soumettant à un rayonnement infrarouge ou à micro-ondes. Les particules qui ont été traitées dans le dispositif 29 sont récupérées dans une trémie 30 à partir de l'extrémité inférieure de laquelle elles sont acheminées, par exemple par transport pneumatique au moyen d'une soufflante 31 et d'une conduite 32, jusqu'à un silo 33 pour une maturation de quelques heures et un séchage. L'installation de la figure 7 peut éventuellement comporter un deuxième dispositif de traitement 34, similaire au dispositif de traitement 29, auquel les particules en provenance du silo 33 sont acheminées au moyen d'une autre soufflante 35 et d'une autre conduite 36, pour y subir une nouvelle opération d'expansion avant d'être mises en sacs. Les particules sortant du dispositif de traitement 34 sont récupérées dans une trémie 37 à partir de l'extrémité inférieure de laquelle elles sont acheminées au moyen d'une soufflante 38 et d'une conduite 39 jusqu'à un poste d'ensachage 40 où elles sont mises dans des sacs tels que le sac 41.

On décrira maintenant le fonctionnement de l'installation représentée sur la figure 7. La matière première utilisée est chargée dans la trémie 9 d'où elle s'écoule à l'intérieur du corps 8 de l'extrudeuse. Le corps 8 de l'extrudeuse est chauffé de manière à faire fondre la matière première. Celle-ci peut être par exemple un polymérisat de styrène rendu expansible par adjonction d'agents gonflants connus, par exemple du pentane ou du fréon, dans une proportion de 3 à 7% en poids du polymérisat de styrène.

Ces agents gonflants peuvent être inclus à l'origine dans la matière première telle qu'on la trouve dans le commerce par exemple sous la forme de granulés ou de perles destinées à la fabrication de pièces moulées en polystyrène expansé. A titre de variante, les agents gonflants peuvent être injectés à l'intérieur du corps 8 de l'extrudeuse ou mélangés et diffusés de toute autre façon connue dans le polymérisat en fusion.

D'autres adjuvants tels que des agents d'amorçage, des agents donnant aux particules des propriétés d'autoextinction au feu, des agents antistatiques, des agents colorants, des agents de mouillage, etc.. peuvent aussi être ajoutés de façon connue à la matière première. Ces divers agents peuvent être introduits dans la trémie 9 de l'extrudeuse ou encore mélangés au préalable à la matière première dans un agitateur. A titre d'agent d'amorçage, on peut par exemple utiliser des acides organiques tels que l'acide citrique, combinés avec du bicarbonate de sodium qui libère de l'anhydride carbonique. L'intérêt d'ajouter des agents d'amorçage est qu'ils permettent d'obtenir une uniformité de la structure cellulaire, dont dépendra la résistance des particules. La proportion d'acide citrique et de bicarbonate de sodium peut être comprise entre 0,5 et 12% en poids du polymérisat de styrène à extruder. A titre d'agent d'autoextinction, on peut utiliser par exemple des composés halogénés combinés avec d'autres agents connue d'ignifugation.

Dans le cas où l'on utilise à titre de matière première un polymérisat de styrène, la température à l'intérieur du corps 8 de l'extrudeuse est réglée de telle façon qu'elle soit comprise entre 90° et 110°C à l'extrémité d'entrée du corps 8, c'est-à-dire du côté de la trémie 9, d'environ 150°C au milieu du corps 8 et enfin d'environ 80°C à 150°C à l'extrémité opposée du corps 8 près de la filière 10, de façon à obtenir une viscosité appropriée du polymérisat de styrène au moment de son passage à travers l'orifice de la filière 10. De préférence, la température à ladite extrémité opposée du corps 8 est réglée de telle façon que la matière thermoplastique contenant l'agent gonflant soit à l'état plastique, c'est-à-dire à une température comprise entre son point de ramollissement et son point de fusion, au moment où elle sort du ou des orifices de la filière 10. Dans le cas où l'on utilise un polymérisat de styrène, la température de celui-ci à la sortie de la filière 10 peut être comprise entre 80°C et 120°C, de préférence entre 85°C et 100°C.

La masse de polystyrène expansible à l'état plastique sortant de la filière 10 est découpée par les lames 13 du dispositif rotatif de coupe 12 de la manière suivante. Chaque lame 13, lorsqu'elle arrive dans la position représentée sur la figure 8 vient frapper la partie supérieure 42 de la masse de polystyrène expansible 43 à l'état plastique qui sort du tube 17 et qui se trouve près du bord supérieur du tube 17. La pression ainsi appliquée par la lame 13 à la partie 42 de la matière 43 déforme ou élargit cette dernière dans les directions indiquées par les deux flèches opposées $H_1$ et $H_2$ (figure 9a) et simultanément commence à rabattre ou recourber la partie 42 vers le bas comme montré en 44 sur la figure 9b. Ensuite, en poursuivant son trajet, la lame 13 continue à élargir la masse de matière 43 comme montré en 45 sur la figure 10a et à recourber ladite masse comme montré en 46 sur la figure 10b. Les figures 11a et 11b montrent la phase suivante dans laquelle le mouvement de rabattement de la partie 47 s'est encore accentuée et la lame 13 se rapproche du bord inférieur de l'extrémité du tube 17. Les figures 12a et 12b montrent le copeau de polystyrène 48 avec sa partie recourbée 49 au moment où il est découpé de la masse de matière 43 par un effet de cisaillement par la lame 13 en coopération avec le bord inférieur de l'extrémité du tube 17. Enfin, la figure 13b montre le copeau de polystyrène 48 qui vient d'être découpé et qui est propulsé par la lame 13 vers la trémie 23 (non montré dans la figure 13b).

La partie 44, 46, 47, 49 de la masse de polystyrène 43 qui est recourbée au cours du mouvement de la lame 13 et qui constituera le côté recourbé 6 de la particule 1 (figures 1 et 2) se colle ou se soude légèrement à la face d'extrémité 50 de la masse de polystyrène 43, mais cela n'a pas d'importance car la partie recourbée 49 se décollera pendant le traitement d'expansion auquel les copeaux 48 sont soumis ultérieurement.

Les lames 13 découpent la masse de polystyrène 43 qui sort du tube 17 avant qu'une expansion notable ne puisse se produire. Pendant les instants qui suivent le découpage et dans la trémie 23, les copeaux 48 sont en partie expansés sous l'action des gaz qu'ils contiennent et qui se dilatent sous l'effet de la température résiduelle interne des copeaux qui sont encore relativement mous et qui sont maintenant dans l'air à la pression atmosphérique. A ce moment, le gaz diffuse dans la matière des copeaux relativement mous qui, en se refroidissant au contact de l'air, emprisonne le gaz en donnant une structure interne à cellules fermées. A ce stade, les copeaux ont une densité apparente d'environ 25 à 35 kg/m³. Les copeaux 48, partiellement expansés, sont acheminés par la soufflante 24 et la conduite 25 au réservoir 26 d'où ils sont acheminés par la soufflante 27 et la conduite 28 au dispositif de traitement 29 dans lequel ils sont mis en contact avec de la vapeur d'eau saturée à la pression atmosphérique pendant quelques minutes. Les calories apportées par la vapeur d'eau ramollissent le polystyrène et dilatent à nouveau le gaz contenu dans les particules, ce qui provoque l'expansion de ces dernières. Au cours de cette expansion, la partie recourbée 49 des copeaux 48 se décolle et sa cambrure s'accentue ancore afin de former le côté recourbé 6 de la particule 1 représenté sur les figures 1 et 2. Après avoir été traitées dans le dispositif 29, les particules expansées sont acheminées par la soufflante 31 et la conduite 32 dans le silo 33 pour une maturation de quelques heures et un séchage. Cette durée dépend de la matière utilisée et des conditions thermiques, hygrométriques et de pressions atmosphériques. Dans le silo 33, les cellules internes des particules se stabilisent et, par osmose, l'air pénètre dans toutes les cavités. Si cela est nécessaire, une nouvelle opération d'expansion peut être éventuellement effectuée dans le dispositif de traitement 34, de la même manière que dans le dispositif de traitement 29, avant que les particules ne soient mises en sacs. Les particules ainsi obtenues ont une densité apparente comprise entre 4 kg/m³ et 6,5 kg/m³. Pour cela, il a suffi d'augmenter seulement de 1,8 à 2,7 fois le volume de la matière extrudée au lieu de 7 à 10 fois dans certains procédés connus, d'où une économie d'énergie importante. Ceci tient au fait que les copeaux de polystyrène 48 sont déjà partiellement expansés avant d'être traités à la vapeur dans le dispositif de traitement 29.

A titre d'exemple, en utilisant un polymérisat de styrène du commerce de qualité extrusion, contenant un agent gonflant dans les proportions indiquées plus haut, on a obtenu de bons résultats dans les conditions opératoires suivantes. La température du corps 8 de l'extrudeuse 7 a été réglée de manière que la température du polymérisat à la sortie de la filière 10 soit d'environ 90°C. Le tube 17 de la filière 10 avait un diamètre intérieur d égal à 5 mm. Le tambour 14 avait un diamètre de 58 mm et portait six lames 13 de 2 mm d'épaisseur et dépassant radialement de 8 mm de leur support 15 de telle façon que le bord tranchant 13a des lames décrive dans l'espace un cercle T de diamètre D égal à 106 mm. La vitesse de rotation du tambour 14 était réglée à environ 2200 t/mn et la vitesse de rotation de la vis sans fin de l'extrudeuse 7 était réglée à environ 105 t/mn. L'axe 16 du tambour était décalé par rapport à l'axe 19 du tube 17 d'une quantité h égale à 9 mm. Dans ces conditions, les particules obtenues après le traitement d'expansion en deux étapes décrites plus haut, avaient la forme représentée sur les figures 1 et 2, avec une longueur L environ égale à 37 mm, égale à 9 mm et une densité apparente de 5 kg/m³ environ.

Les dimensions des particules dépendent du diamètre intérieur d du tube 17, de la vitesse de rotation du tambour 14 et de la vitesse d'extrusion, cette dernière dépendant elle même de la vitesse de rotation de la vis sans fin de l'extrudeuse, de la viscosité du polymérisat et du diamètre intérieur d du tube 17. Le diamètre d du tube 17 peut être compris entre 3 et 8 mm sans que la forme des particules change. On peut également faire varier la vitesse de rotation du tambour 14 entre 500 et 2500 t/mn en fonction du débit de la matière extrudée à travers le tube 17 de la filière 10, débit qui peut être réglé en faisant varier la vitesse de rotation de la vis sans fin. Ein outre, le nombre de lames 13 n'est pas nécessairement égal à 10. Des essais effectués avec 1, 2, 4, 6 et 8 lames n'ont montré aucun changement significatif de la forme des particules. Toutefois, plus le nombre de lames est petit, plus il faut augmenter la vitesse de rotation du tambour 14 et/ou diminuer la vitesse d'extrusion afin de compenser le faible nombre de lames. Pour un débit donné et constant de la matière extrudée à travers le tube 17, si on diminue la vitesse de rotation du tambour 14, on augmente l'épaisseur des particules. Inversement, si on augmente la vitesse de rotation du tambour 14, on diminue l'épaisseur des particules. La partie recourbée 49 des copeaux 48 existe toujours quelle que soit l'épaisseur des copeaux 48 lorsque cette épaisseur est comprise entre 3 mm et 0,5 mm pour un diamètre d du tube 17 égal à 5 mm.

Il va de soi que le mode de réalisation qui a été décrit ci-dessus a été donné à titre d'exemple purement indicatif et nullement limitatif, et que de nombreuses variantes peuvent être apportées par l'homme de l'art sans pour autant sortir du cadre de la présente invention. C'est ainsi notamment que, au lieu d'utiliser comme matière première un polymérisat de styrène, on peut utiliser toute autre matière thermoplastique expansible telle que des polyuréthanes ou des polyéthylènes contenant des agents gonflants appropriés. Bien entendu, dans ce dernier cas, les conditions de température indiquées plus haut pourront être modifiées en fonction des caractéristiques physiques de la matière utilisée. Toutefois, dans le cas où on utilise du polyuréthane, on n'obtient pas une structure interne à cellules fermées.

En outre, bien qu'il soit plus avantageux de placer le dispositif rotatif de coupe 12 immédiatement à la sortie de la filière 10, le dispositif de coupe 12 pourrait être disposé immédiatement à la sortie d'un autre orofice de calibrage placé en aval de la filière 10. Toutefois, dans ce dernier cas, des dispositions devraient être prises pour empêcher la matière thermoplastique expensible de s'expanser entre la filière 10 et l'autre orifice de calibrage et pour maintenir ladite matière à une température telle qu'elle soit à l'état plastique à la sortie dudit orifice de calibrage, c'est-à-dire à une température comprise entre son point de ramollissement et son point de fusion. En outre, l'axe de rotation du dispositif de coupe 12 devra être décalé par rapport à l'axe de l'orifice de calibrage de la même manière que par rapport à l'axe de l'orifice de sortie de la filière 10.

En outre, au lieu d'être expansées à la vapeur d'eau, les particules peuvent être expansées par tout autre moyen connu.

## Revendications

1. Particule de remplissage en mousse de matière thermoplastique, comprenant une face concave (3) et une face convexe (2) qui se raccordent suivant une ligne fermée et qui ont une peau comportant des cellules fermées, caractérisée en ce qu'elle présente la forme d'une soucoupe sensiblement ovale dont un seul côté (6) correspondant à la plus grande dimension est recourbé vers le centre de la surface concave (3).

2. Particule de remplissage selon la revendication 1, caractérisée en ce qu'elle a une structure interne (5) formée de cellules fermées.

3. Particule de remplissage selon la revendication 1 ou 2, caractérisée en ce qu'elle a une longueur L comprise entre 30 et 40 mm, une largeur 1 comprise entre 20 et 30 mm et une épaisseur w, y compris le côté recourbé (6), comprise entre 7 et 12 mm.

4. Particule de remplissage selon la revendication 3, caractérisée en ce que sa longueur L est environ égale à 37 mm, sa largeur 1 environ égale à 26 mm et son épaisseur e environ égale à 9 mm.

5. Particule de remplissage selon l'une quelconque des revendications 1 à 4, caractérisée en ce que les faces concave et convexe (2 et 3) se raccordent par un bord arrondi (4).

6. Procédé de fabrication de particules de remplissage selon la revendication 1, consistant à faire passer en continu une masse de matière thermoplastique expansible à une température prédéterminée à travers au moins un orifice, et à découper périodiquement la partie en saillie de ladite masse à sa sortie de l'orifice afin de produire plusieurs particules, caractérisé en ce qu'il consiste à recourber vers le centre dudit orifice la partie de ladite masse qui se trouve près d'un côté de la périphérie dudit orifice, et à effectuer le découpage de ladite masse de côté opposé de la périphérie dudit orifice.

7. Procédé selon la revendication 6, caractérisé en ce que l'on maintient ladite masse de matière thermoplastique à une température comprise entre son point de ramollissement et son point de fusion pendant qu'elle sort dudit orifoce.

8. Procédé selon la revendication 7, caractérisé en ce que, dans le cas où ladite matière est un polymérisat de styrène, la masse de matière thermoplastique est maintenue à une valeur comprise entre 85° C et 100° C.

9. Dispositif pour la mise en oeuvre du procédé selon la revendication 6, comprenant des moyens (7) pour faire passer en continue une masse de matière thermoplastique expansible chauffée à travers au moins un orifice (17), des moyens pour régler la température de ladite masse sortant dudit orifice, et un dispositif de coupe rotatif (12) disposé immédiatement à la sortie dudit orifoce et comportant un tambour 14) qui est muni à sa périphérie d'au moins une lame de coupe (13) et dont l'axe de rotation (16) est perpendiculaire à l'axe (19) dudit orifice (17), caractérisé en ce que ledit orifice (17) a, de façon connue en soi, une face d'extrémité (18) plane et perpendiculaire à l'axe (19) de l'orifice, et en ce que l'axe de rotation (16) du tambour (14) est décalé par rapport à l'axe (19) de l'orifice (17) dans une direction telle que, dans la zone de sortie de l'orifice (17), le trajet (T) suivi par le bord tranchant (13a) de la lame 13) forme avec la face plane d'extrémité (18) de l'orifice un angle aigu (ᴧ) dont le sommet est dirigé dans le sens de rotation du tambour (14).

10. Dispositif selon la revendication 9, caractérisé en ce que pour un diamètre d de l'orifice (17) égal à 5 mm et pour un diamètre de coupe D égal à 106 mm, l'axe (16) du tambour (14) est décalé d'une quantité h égale à environ 9 mm.


**Patentansprüche**

1. Thermoplastisches Schaumstoffüllteilchen mit einer konkaven (3) und einer konvexen (2) Fläche, die sich auf einer geschlossenen Linie treffen, und die eine Oberfläche mit geschlossenen Zellen haben, dadurch gekennzeichnet, daß es die Form eines leicht ovalen Untersatzes hat, dessen eine Seite (6), die der größten Abmessung entspricht, zur Mitte der konkaven Fläche (3) hin gekrümmt ist.

2. Füllteilchen nach Anspruch 1, dadurch gekennzeichnet, daß es eine Innenstruktur (5) aus geschlossenen Zellen aufweist.

3. Füllteilchen nach Anspruch 1 oder 2, dadurch gekennzeichnet, daß es eine Länge (L) zwischen 30 und 40 mm, eine Breite (I) zwischen 20 und 40 mm und eine Dicke (e), einschließlich der gekrümmten Kante (6) zwischen 7 und 12 mm aufweist.

4. Füllteilchen nach Anspruch 3, dadurch gekennzeichnet, daß die Länge (L) gleich 37 mm, die Breite (I) gleich 26 mm und die Dicke (e) etwa 9 mm sind.

5. Füllteilchen nach einem der Ansprüche 1 bis 4, dadurch gekennzeichnet, daß sich die konkave und konvexe Fläche (2, 3) in einer runden Kante (4) treffen.

6. Verfahren zum Herstellen von thermoplastischen Schaumstoffteilchen nach Anspruch 1, welches besteht aus den Schritten: kontinuierliches Durchdrücken einer expandierfähigen thermoplastischen Masse bei einer vorbestimmten Temperatur durch mindestens eine Öffnung, und periodisches Abscheiden des beim Verlassen der Öffnung vorragenden Teils der Masse, um mehrere Teilchen zu erzeugen, dadurch gekennzeichnet, daß es die Schritte aufweist: Krümmen des Teils der Masse, der sich nahe bei einer Umfangskante der Öffnung befindet, zum Mittelpunkt der Öffnung hin, und Abschneiden der Masse gegen die gegenüberliegende Umfangskante der Öffnung.

7. Verfahren nach Anspruch 6, dadurch gekennzeichnet, daß man die Masse des thermoplastischen Materials während des Austritts aus der Öffnung auf einer Temperatur zwischen dem Erweichungspunkt und dem Schmelzpunkt hält.

8. Verfahren nach Anspruch 7, dadurch gekennzeichnet, daß, wenn die Masse ein Styrolpolymerisat ist, die thermoplastische Masse auf einer Temperatur zwischen 85°C und 100°C gehalten wird.

9. Vorrichtung zum Durchführen des Verfahrens nach Anspruch 6, mit einer Vorrichtung (7) zum kontinuierlichen Durchdrücken einer erwärmten, expandierfähigen Masse aus thermoplastischem Material durch mindestens eine Öffnung (17), mit einer Vorrichtung zum Steuern der Temperatur der durch die Öffnung tretenden Masse, und mit einer Rotationsschneidvorrichtung (12), die unmittelbar am Öffnungsausgang angeordnet ist und eine Trommel (14) aufweist, die an ihrem Umfang mit mindestens einer Schneidklinge (13) versehen ist, und deren Drehachse (16) senkrecht zur Achse (19) der Öffnung (17) ist, dadurch gekennzeichnet, daß die Öffnung in an sich bekannter Weise eine ebene, zur Öffnungsachse (19) senkrechte Endfläche (18) aufweist, und daß die Rotationsachse (16) der Trommel (14) bezüglich der Achse (19) der Öffnung (17) so in eine Richtung verschoben ist, daß im Austrittsbereich der Öffnung (17) die Bahn (T) der Schneidkante (13a) der Klinge (13) mit der ebenen Endfläche (18) der Öffnung einen spitzen Winkel ($\alpha$) bildet, dessen Spitze in die Drehrichtung der Trommel (14) weist.

10. Vorrichtung nach Anspruch 9, dadurch gekennzeichnet, daß bei einem Durchmesser (d) der Öffnung (17) von 5 mm und bei einem Schneiddurchmesser (D) von 106 mm die Achse (16) der Trommel (14) um eine Strecke (h) von etwa 9 mm verschoben ist.


**Claims**

1. Thermoplastic foam filling particle having a concave face (3) and a convex face (2) connected along a closed line and which have a skin incorporating closed cells, characterized in that it is shaped like a substantially oval saucer, whereof one side (6) corresponding to the largest dimension is curved towards the centre of the concave surface.

2. Filling particle according to claim 1, characterized in that it has an internal structure (5) formed from closed cells.

3. Filling particle according to claims 1 or 2, characterized in that it has a lenght L between 30 and 40 mm, a with 1 between 20 and 30 mm and a thickness e, including the curved side (6), between 7 and 12 mm.

4. Filling particle according to claim 3, characterized in that the lenght L is approximately equal to 37 mm, the width 1 approximately equal to 26 mm and the thickness e approximately equal to 9 mm.

5. Filling particle according to any one of the claims 1 to 4, characterized in that the concave and convex faces (2, 3) are connected by a rounded edge (4).

6. Process for the production of filling particles according to claim 1, consisting of continuously passing a mass of expansible thermoplastic material at a predetermined temperature through at least one orifice and periodically cutting off the projecting part of said mass when it passes through the orifice in order to produce several particles, characterized in that it consists of curving towards the centre of said orifice, that part of the mass located close to one side of the orifice periphery and cutting off the mass on the side opposite to the orifice periphery.

7. Process according to claim 6, characterized in that the said thermoplastic material mass is kept at a temperature between its softening point and its melting point as it passes out of the orifice.

8. Process according to claim 7, characterized in that if the material is a styrene polymer, the thermoplastic material mass is kept at a value between 85 and 100°C.

9. Apparatus for performing the process according to claims 6, comprising means (7) for continuously passing a heated expansible thermoplastic material mass through at least one orifice (17), means for regulating the temperature of the mass leaving the orifice, and a rotary cutting device (12) positioned immediately at the outlet from said orifice and having a drum (14), which is peripherally provided with at least one cutting blade (13) and whose rotation axis (16) is perpendicular to the axis (19) of orifice (17), characterized in that in per se known manner orifice (17) has a planar end face (18) perpendicular to the axis (19) of the orifice and in that the rotation axis (16) of drum (14) is displaced with respect to axis (19) of orifice (17) in a direction such that, in the outlet area of orifice 17), the path (T) followed by the cutting edge (13a) of blade (13) forms with the planar end face (18) of the orifice, an acute angle ($\alpha$) whose apex points in the rotation direction of drum (14).

10. Apparatus according to claim 9, characterized in that for a diameter d of orifice (17) equal to 5 mm and for a cutting diameter D equal to 106 mm, axis (16) of drum (14) is displaced by a quantity h equal to approximately 9 mm.

FIG.1

FIG.2

FIG.3

FIG.5

FIG.6

FIG.4

FIG.8

FIG.7

FIG.9a

FIG.9b

FIG.10a

FIG.10b

FIG.11a

FIG.11b

FIG.12a

FIG.12b

FIG.13b